(19) Europäisches Patentamt / European Patent Office / Office européen des brevets

(11) **EP 1 818 684 B1**

(12) **FASCICULE DE BREVET EUROPEEN**

(45) Date de publication et mention
de la délivrance du brevet:
**31.03.2010 Bulletin 2010/13**

(51) Int Cl.:
*G01S 13/38* (2006.01)    *G01S 7/40* (2006.01)

(21) Numéro de dépôt: **07101273.6**

(22) Date de dépôt: **26.01.2007**

(54) **Méthode de détection hyperfréquence et détecteur utilisant cette méthode**

Verfahren zur Hochfrequenzsdetektion und Sensor, der dieses Verfahren anwendet

Hyperfrequency detection method and detector using said method

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.02.2006 FR 0650462**

(43) Date de publication de la demande:
**15.08.2007 Bulletin 2007/33**

(73) Titulaire: **Schneider Electric Industries SAS
92500 Rueil-Malmaison (FR)**

(72) Inventeurs:
• **Masri, Ihssen
c/o Schneider Electric Industries SAS
92500 Rueil-Malmaison (FR)**
• **Boudet, Thierry
38130 Echirolles (FR)**
• **Guillot, Alain
16730 Fleac (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**FR-A- 2 848 302        US-A- 4 238 795
US-A- 5 768 131        US-A1- 2004 246 166
US-A1- 2004 263 383    US-A1- 2005 007 124**

**Description**

La présente invention se rapporte à une méthode de détection d'une cible par signaux hyperfréquence permettant de détecter la présence d'une cible ou de mesurer la distance d'une cible à faible distance. L'invention se rapporte également à un détecteur hyperfréquence de faible coût mettant en oeuvre cette méthode, appartenant à la famille des radars à très courte portée et émettant des signaux radiofréquence fonctionnant sur une bande de fréquence autorisée par l'autorité de régulation européenne, connue sous le nom d'ISM (Industriel, Scientifique et Médical), comprise entre 2,4 et 2,48 GHz.

Il existe déjà de nombreux dispositifs hyperfréquences capables de détecter une cible. Un premier type de détecteur utilise des radars à émissions continues de type FMCW (Frequency Modulated Continuous Wave). Ces radars sont parmi les plus utilisés pour mesurer simultanément la distance et la vitesse d'un objet pour une portée comprise généralement entre 2m et 200m. Le principe de mesure repose généralement sur la comparaison fréquentielle entre un signal émis modulé en fréquence et un signal d'écho reçu après réflexion sur la cible à détecter. L'écho de l'objet retardé est mélangé avec le signal d'émission produisant une fréquence de battement. Malheureusement, dans le cas des objets immobiles, le radar FMCW est peu adapté pour une détection à faible portée (c'est-à-dire une portée inférieure à environ 1 mètre) avec une extrême précision sur la mesure de distance, à cause de la résolution qui demande une très grande bande passante. En effet, la bande passante nécessaire pour une précision en distance d'environ 1cm est largement supérieure à la bande passante ISM.

Un second type de détecteur exploite le temps de vol que met l'onde pour effectuer le trajet aller et retour entre le radar et la cible à détecter. Le signal émis peut être constitué d'une onde impulsionnelle ou d'une onde CW (Continuous Wave) modulée. Afin de mesurer le temps de vol, on exploite le retard existant entre le code émis et le code reçu par un traitement numérique classique de corrélation. Cependant, lorsque la portée du système est faible, le temps de vol devient très petit (par exemple 2ns pour une distance de 30 cm). Un tel dispositif est donc peu adapté à détecter des cibles à des courtes distances car le décalage à opérer est beaucoup trop court. De plus, le système ne reçoit pas seulement l'impulsion réfléchie par l'objet, mais aussi des impulsions de fuite qui sont dues principalement à la désadaptation de l'antenne et la mauvaise isolation entre l'émission et la réception. Dans ce cas, il devient très difficile de distinguer entre l'impulsion réfléchie par l'objet et les impulsions parasites et par conséquent la mesure de distance est beaucoup plus compliquée à réaliser. Il nécessite également une très grande bande passante.

Une autre méthode connue pour mesurer la distance d'un objet consiste à utiliser notamment la rotation de phase du signal écho de l'objet, c'est-à-dire à mesurer le décalage de phase entre le signal émis par le radar et le signal écho reçu. Pour simplifier, ce décalage de phase sera appelé phase dans la suite du présent document. En théorie, cette mesure de la phase devrait être suffisante pour mesurer la distance de l'objet par rapport au radar. Mais en pratique, la mesure de distance est ambiguë à chaque fois que la phase est supérieure à $2\pi$. Il est donc préférable de mesurer également la différence ou l'écart de phase existant pour deux signaux radars émis à deux fréquences distinctes, ainsi que l'amplitude du signal écho reçu. Les documents US2004/0263383, US2004/0246166 et US2005/0007124 mettent déjà en oeuvre une implémentation du principe de détection d'objet à très courte portée basé sur la mesure de l'amplitude du signal écho reçu de l'objet et/ou la phase du signal écho de l'objet et/ou l'écart de phase entre deux fréquences du signal écho.

Cependant, l'expérience montre que des perturbations, telles que des ondulations, apparaissent sur les courbes de réponse en amplitude, en phase, et en écart de phase, en fonction de la distance radar/objet, notamment lorsque le niveau du signal écho de l'objet est plus faible que le niveau des signaux perturbateurs ou notamment en cas d'utilisation d'une seule antenne pour l'émission et la réception. Par conséquent, les courbes de mesure ne sont plus monotones ce qui fait que la précision de la mesure de distance de l'objet n'est pas satisfaisante.

Ces perturbations proviennent principalement des signaux de fuite du circulateur de l'antenne et de la désadaptation de l'antenne, mais aussi de la distorsion du démodulateur IQ servant à analyser les signaux reçus.

L'utilisation d'une seule antenne rend plus critique l'effet de désadaptation de l'antenne et il est important de se prémunir des ondulations que cela peut provoquer pour éviter de dégrader la sensibilité du détecteur. La solution d'utiliser deux antennes séparées pour l'émission et la réception permettrait d'éviter les problèmes d'isolation entre voie d'émission et voie de réception, mais cette solution nécessite un coût et un encombrement important non compatibles avec la réalisation d'un détecteur hyperfréquence de petite taille et à faible coût.

Il existe aussi des méthodes d'annulation de couplage entre émission et réception mais ces méthodes analogiques proposent des architectures complexes à mettre en oeuvre et exigent une parfaite adaptation des composants radiofréquence utilisés, ce qui augmente leur coût.

C'est pourquoi, le but de l'invention est de proposer une méthode simple et peu coûteuse pour améliorer la précision du système de détection ou diminuer l'hystérésis de décision (c'est-à-dire améliorer le rapport entre l'étendue de la zone d'incertitude de mesure et la portée typique du détecteur). Un détecteur hyperfréquence mettant en oeuvre une telle méthode sera capable de détecter des cibles statiques et mobiles, métalliques et non métalliques, situées à courte distance (c'est-à-dire environ inférieure ou égale à 1 mètre), avec un faible hystérésis de décision (de l'ordre de 1 centimètre). De plus, ce détecteur travaillera dans une bande passante étroite compatible avec la bande de fréquence ISM 2,4GHz - 2,48GHz, qui permet la réalisation d'un radar faible coût, et il n'utilisera qu'une seule antenne, par exemple une antenne patch, de façon à optimiser sa taille et son coût.

Pour cela, l'invention décrit une méthode de détection d'une cible dans un détecteur hyperfréquence comportant des moyens d'émission et des moyens de réception de signaux radiofréquence dans la bande de fréquence ISM, une unité de traitement délivrant une information de présence ou de distance de la cible. La méthode est caractérisée en ce qu'elle comprend :

- une étape préliminaire de calibrage à vide dans laquelle les moyens d'émission émettent un signal de calibrage, les moyens de réception reçoivent en écho un signal de calibrage correspondant et l'unité de traitement calcule et mémorise l'amplitude du signal de calibrage reçu et la phase du signal de calibrage reçu,
- une étape de mesure d'une cible dans laquelle les moyens d'émission émettent des signaux de mesure selon au moins deux fréquences d'émission distinctes et les moyens de réception reçoivent en écho des signaux de mesure correspondants réfléchis par la cible,
- une étape de correction dans laquelle l'unité de traitement tient compte de l'amplitude du signal de calibrage reçu et de la phase du signal de calibrage reçu pour calculer une amplitude corrigée des signaux de mesure reçus, une phase corrigée des signaux de mesure reçus et un écart de phase corrigé entre deux signaux de mesure reçus de fréquences distinctes,
- une étape de décision dans laquelle l'unité de traitement utilise d'abord l'amplitude corrigée pour détecter la présence d'une cible, puis utilise l'écart de phase corrigé pour calculer une première estimation de distance de cible, puis utilise la phase corrigée pour calculer une distance précise à partir de la première estimation de distance.

Avantageusement, cette méthode permet ainsi de calculer un vecteur perturbateur à vide complexe dont on utilise l'amplitude et la phase pour corriger les mesures de distance de cible, dans le but de compenser les perturbations dues notamment au démodulateur IQ, au circulateur et à l'antenne.

Selon une caractéristique, l'étape de calibrage à vide et l'étape de mesure sont effectuées N fois, à partir de N fréquences d'émission distinctes dans la bande de fréquence ISM.

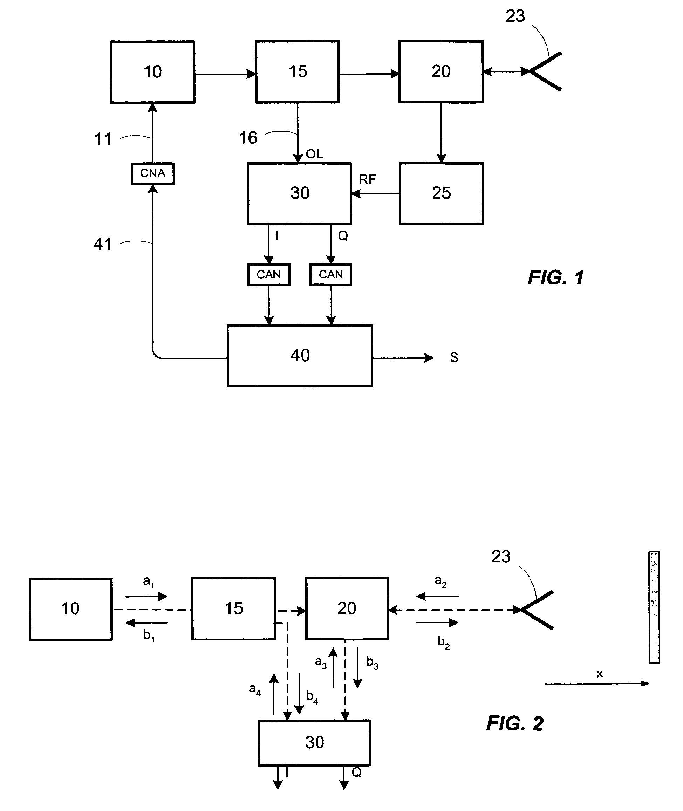

D'autres caractéristiques et avantages vont apparaître dans la description détaillée qui suit en se référant à un mode de réalisation donné à titre d'exemple et représenté par la figure 1 qui montre un schéma simplifié donnant l'architecture générale d'un détecteur conforme à l'invention, et par la figure 2 qui illustre la mise en évidence de l'étape de calibrage.

En référence au mode de réalisation de la figure 1, un détecteur hyperfréquence comporte un oscillateur radiofréquence 10 de type VCO (Voltage Controlled Oscillator) qui émet un signal dont la fréquence est contrôlée par une tension continue d'entrée 11. Cet oscillateur 10 délivre une porteuse dans la bande de fréquence allouée, à savoir la bande ISM entre 2,4GHz et 2,48 GHz. Un séparateur 15, tel que par exemple un coupleur -10dB, permet de récupérer une partie de la puissance du signal d'émission venant de l'oscillateur 10 pour l'injecter dans la voie OL (Oscillateur Local) d'un démodulateur IQ 30. Ce signal 16 servira de phase de référence au démodulateur IQ 30.

Le signal d'émission traverse ensuite un diviseur de Wilkinson 20 qui est utilisé pour isoler le signal d'émission du signal de réception. Il serait également possible d'utiliser un circulateur passif à la place du diviseur de Wilkinson, mais un circulateur passif est plus cher et moins facilement intégrable dans un circuit intégré qu'un diviseur de Wilkinson. Le signal d'émission est ensuite envoyé au moyen d'une antenne 23. Après réflexion sur une cible de l'onde électromagnétique émise, un signal réfléchi est récupéré par la même antenne 23. Ce signal de réception, appelé aussi signal écho, est isolé du signal d'émission par le diviseur de Wilkinson 20 puis est amplifié par un amplificateur 25 de faible bruit, ayant par exemple 20dB de gain. L'utilisation d'une seule antenne 23 pour l'émission et la réception permet notamment d'optimiser le coût et la taille du détecteur. Cette antenne 23 peut être par exemple une antenne patch. L'avantage d'une antenne patch est d'être imprimée, donc facilement intégrable.

Il est nécessaire de récupérer l'enveloppe complexe du signal de réception dans le but d'obtenir une information donnant l'amplitude du signal écho mais aussi la phase du signal écho, correspondant au déphasage entre le signal émis et le signal écho reçu. Une fois amplifié par l'amplificateur 25, le signal écho est donc injecté dans l'entrée RF (Radio Fréquence) du démodulateur IQ 30. Le démodulateur IQ 30 fournit en sortie deux signaux analogiques I et Q basse fréquence, qui représentent une projection du signal écho dans un repère orthogonal à deux axes.

Le niveau de puissance du signal écho reçu peut parfois être très faible, particulièrement dans des zones de détection aveugles, ce qui peut se traduire par des erreurs sur les mesures d'amplitude et de phase du signal écho. La méthode de détection préconisée dans l'invention a notamment pour but de corriger les erreurs liées à la dynamique du démodulateur IQ 30. Grâce à cette méthode, on peut donc utiliser avantageusement un démodulateur IQ 30 peu coûteux dont la dynamique est faible, par exemple de l'ordre de 30dB.

Les deux signaux de sortie I et Q du démodulateur IQ 30 sont ensuite envoyés, via des convertisseurs analogiques/digitaux (CAN), vers une unité de traitement numérique 40. L'unité de traitement 40 effectue un traitement du signal permettant de calculer l'amplitude et la phase du signal écho à partir des signaux I et Q reçus, dans le but d'obtenir un signal de sortie S indiquant une présence d'une cible et/ou une distance d'une cible par rapport au détecteur. L'unité de traitement 40 délivre également un signal 41 de consigne de fréquence, dans le but de fournir une valeur de consigne de la fréquence d'émission des signaux à émettre par le détecteur. Cette consigne 41 est envoyée via un convertisseur digital/analogique (CNA) sur l'entrée 11 de l'oscillateur VCO 10.

La méthode proposée par l'invention va maintenant être décrite. Cette méthode doit permettre de diminuer la présence et l'influence des perturbations et ondulations des signaux mesurés dans le but de diminuer l'hystérésis de décision d'un tel détecteur hyperfréquence.

Elle comprend une première étape préliminaire de calibrage, dite de calibrage à vide. Cette étape préliminaire se déroule lorsque le détecteur est déjà installé dans son environnement de travail et se déroule à vide, c'est-à-dire sans présence de cible dans la zone de détection du détecteur. Durant cette étape de calibrage à vide, les moyens d'émission 10,15,20,23 du détecteur émettent un signal de calibrage selon une fréquence prédéfinie par l'unité de traitement 40 (via la consigne 41), dans la bande de fréquence ISM. Les moyens de réception 20,23,25,30 du détecteur reçoivent un signal de calibrage correspondant, qui est l'écho du signal de calibrage émis. Le signal de calibrage reçu est transmis à l'unité de traitement 40 qui alors calcule et mémorise l'amplitude du signal de calibrage reçu ainsi que la phase du signal de calibrage reçu (c'est-à-dire le déphasage entre le signal de calibrage émis et le signal de calibrage reçu).

Afin de préciser l'importance de l'étape de calibrage à vide, la figure 2 met en évidence la désadaptation de l'antenne 23 et la fuite du diviseur de Wilkinson ou circulateur 20. En référence à cette figure 2, le circuit hyperfréquence est considéré comme un système à quatre ports décrit par la matrice suivante, dans laquelle les termes $a_i$ (i = 1 à 4) correspondent aux ondes entrant dans l'ensemble séparateur-diviseur 15, 20 et $b_i$ aux ondes sortant de l'ensemble séparateur-diviseur 15, 20.

$$b_1 = S_{11}.a_1 + S_{12}.a_2 + S_{13}.a_3 + S_{14}.a_4$$

$$b_2 = S_{21}.a_1 + S_{22}.a_2 + S_{23}.a_3 + S_{24}.a_4$$

$$b_3 = S_{31}.a_1 + S_{32}.a_2 + S_{33}.a_3 + S_{34}.a_4$$

$$b_4 = S_{41}.a_1 + S_{42}.a_2 + S_{43}.a_3 + S_{44}.a_4$$

Avec $a_1$ étant un signal analytique associé au signal de sortie émis par l'oscillateur VCO 10, de la forme $a_1 = A.e^{jwt}$.

En supposant que les ports 3 et 4 sont parfaitement adaptés, c'est-à-dire que le démodulateur IQ 30 ne réfléchit pas, on peut écrire que $a_3 = a_4 = 0$. Par ailleurs, le séparateur/coupleur 15 est parfaitement directif donc $S_{42} = 0$, et le diviseur/circulateur 20 est parfaitement adapté, donc $S_{22} = 0$.

On peut alors montrer que le rapport entre les ondes $b_3$ et $b_4$ entrant dans le démodulateur IQ 30 s'écrit :

$$\frac{b_3}{b_4} = \left[ S_{31} + S_{32}.S_{21}.\Gamma_0 + (1 - |\Gamma_0|^2).S_{32}.S_{21}.A_0(x).e^{j\varphi_0(x)} \right] / S_{41}$$

Cette enveloppe complexe peut aussi être notée :

$$\frac{b_3}{b_4} = \Gamma_r(f) = I_r(f) + j.Q_r(f)$$

avec $\Gamma_0$ représentant le coefficient de réflexion dû à la désadaptation de l'antenne, $A_0(x)$ et $\varphi_0(x)$ représentant l'amplitude et la phase du signal de mesure capté par l'antenne. $A_0(x)$ et $\varphi_0(x)$ dépendent de la distance x de l'objet au radar, de la surface équivalente radar de l'objet, du gain de l'antenne et de la longueur d'onde dans l'air.

Les équations ci-dessus permettent alors d'écrire que :

$$\Gamma_r = \Gamma_v + \alpha.A_0(x).e^{j\varphi_0(x)}$$

avec :

$$\Gamma_v = (S_{31} + S_{32}.S_{21}.\Gamma_0)/S_{41} \quad \text{et} \quad \alpha = (1 - |\Gamma_0|^2).S_{32}.S_{21}/S_{41}$$

dans lequel $\Gamma_r$ représente le vecteur signal de mesure et $\Gamma_v$ représente le vecteur perturbateur à vide.

Ces équations ci-dessus mettent en évidence la perturbation apportée par les termes $S_{31}$ (fuite du diviseur/circulateur) et $\Gamma_0$ (désadaptation de l'antenne) sur les informations utiles de l'amplitude et du signal de mesure qui vont permettre de déterminer la présence d'un objet et sa distance x au radar. La méthode de calibrage proposée repose sur l'hypothèse suivante : En absence d'objet, l'environnement est non réflectif, c'est-à-dire que l'amplitude $A_0(x)$ de l'équation (5) est supposée nulle. On peut donc mesurer le vecteur perturbation à vide $\Gamma_v$.

La méthode de mesure se déroule donc en deux étapes : calibrage à vide en l'absence d'objet pour mesurer le vecteur $\Gamma_v$ ; mesure en présence d'un objet pour mesurer le vecteur $\Gamma_r$. La différence entre ces deux vecteurs permettra ensuite de calculer la présence d'un objet et sa distance x par rapport au détecteur.

Le but de l'étape de calibrage à vide est donc de déterminer le vecteur perturbateur à vide, dont la connaissance est en effet indispensable pour bien apprendre l'environnement de travail du détecteur et l'influence de ses composants internes, de façon à pouvoir corriger ensuite les mesures effectuées par le détecteur. L'étape de calibrage à vide peut donc avoir lieu lors de la mise en place initiale du détecteur dans son environnement ou suite à toute réinitialisation du détecteur.

Une fois que la ou les valeurs de l'amplitude du signal de calibrage reçu et de la phase du signal de calibrage reçu sont mémorisées par l'unité de traitement 40, la méthode de détection comporte une étape de mesure d'une cible à détecter dans laquelle les moyens d'émission 10,15,20,23 émettent des signaux de mesure sur deux fréquences distinctes et les moyens de réception 20,23,25,30 reçoivent en écho des signaux de mesure correspondants réfléchis par la cible éventuelle.

Ces signaux de mesure sont transmis à l'unité de traitement 40 qui calcule alors l'amplitude des signaux de mesure reçus et la phase des signaux de mesure reçus. De plus, puisque les mesures sont effectuées à deux fréquences distinctes de la bande ISM, l'unité de traitement 40 calcule également un écart de phase entre les signaux de mesure reçus à ces deux fréquences distinctes. Ce paramètre d'écart de phase permettra en effet d'améliorer la portée de la détection de la cible. Les deux fréquences sont déterminées par l'unité de traitement 40 (par exemple une mesure à une fréquence F1 de 2,4 GHz suivie d'une mesure à une fréquence F2 de 2,48 GHz).

L'étape suivante est une étape de correction dans laquelle l'unité de traitement 40 tient compte des valeurs (mémorisées durant l'étape de calibrage) de l'amplitude du signal de calibrage reçu et de la phase du signal de calibrage reçu pour calculer :

- une amplitude corrigée des signaux de mesure reçus,
- une phase corrigée des signaux de mesure reçus et
- un écart de phase corrigé entre deux signaux de mesure reçus de fréquences distinctes.

Enfin, la méthode comporte une étape de décision dans laquelle l'unité de traitement 40 du détecteur détermine une information de sortie S du détecteur, à partir de l'amplitude corrigée, de la phase corrigée et de l'écart de phase corrigé. Si le détecteur est par exemple du type détecteur de présence, cette information de sortie S indiquera seulement la présence ou l'absence d'une cible. Si le détecteur est par exemple du type détecteur de proximité, cette information de sortie S indique également la distance de la cible par rapport au détecteur.

Le calcul de l'écart de phase corrigé est important pour déterminer avec une meilleure précision la distance de la cible. En effet, avec une fréquence F égale par exemple à 2,4 GHz, la longueur d'onde L correspondante est de l'ordre de 12 cm. Donc, si l'on utilisait seulement la phase corrigée pour une seule fréquence, la distance d'une cible serait calculée avec un modulo de 6 cm (car l'onde fait l'aller-retour), ce qui limiterait grandement la portée du détecteur. En calculant un écart de phase entre un signal de fréquence F1 de 2,4 GHz et un signal de fréquence F2 de 2,48 GHz, on obtient un signal équivalent de 0,08 GHz dont la longueur d'onde correspondante est alors d'environ 3,6 mètres. La distance d'une cible sera donc calculée avec un modulo de 3,6 mètres, ce qui permet d'augmenter nettement la portée du détecteur.

Durant l'étape de décision, l'unité de traitement 40 utilise d'abord l'amplitude corrigée des signaux de mesure reçus pour déterminer la présence ou l'absence d'une cible en comparant cette amplitude corrigée par rapport à un seuil prédéterminé, mémorisé par exemple dans l'unité de traitement. Si l'amplitude corrigée est inférieure à ce seuil, alors le détecteur signale une absence de cible. Si l'amplitude corrigée est supérieure à ce seuil, alors le détecteur signale une présence d'une cible dans son champ de portée.

Dans le cas où la présence d'une cible est détectée, l'unité de traitement 40 utilise ensuite l'écart de phase corrigé entre deux signaux de mesure reçus de fréquences distinctes. On obtient alors une distance calculée sur une portée d'environ 1,8 mètre (comme indiqué ci-dessus), mais dont la précision n'est pas suffisante, car par exemple une incertitude de 5° sur l'écart de phase donnera alors une incertitude de 180cm * (5° / 360°) = 2cm. L'unité de traitement 40 calcule donc une première estimation de distance de cible, qui couvre une grande portée mais avec un fort hystérésis de décision.

L'unité de traitement 40 utilise ensuite la phase corrigée des signaux de mesure reçus. Cette information permet de calculer une distance beaucoup plus précise mais uniquement sur une portée d'environ 3 cm (comme indiqué ci-dessus). Dans ce cas, une incertitude de 5° sur l'écart de phase donnera alors une incertitude de 3cm * (5° / 360°) = 0,04cm. Ce traitement est donc complémentaire du traitement précédent puisqu'il permet un calcul de distance plus précis autour de cette première estimation de distance préalablement déterminée.

Ainsi, l'association du critère basé sur l'écart de phase corrigé puis du critère basé sur la phase corrigée permet d'obtenir des mesures de distance d'une portée d'environ 1,8 mètre avec un hystérésis de décision de l'ordre de 1%.

Dans un mode de réalisation préféré, l'invention prévoit d'effectuer plusieurs fois l'étape de calibrage à vide en utilisant successivement N fréquences distinctes dans la bande ISM, et dont la couverture spectrale est de préférence la bande ISM, de façon à couvrir au mieux la bande ISM. On peut ainsi mémoriser un nombre N de valeurs distinctes de l'amplitude du signal de calibrage reçu et de la phase du signal de calibrage reçu pour chacune des N fréquences choisies. Dans ce cas, l'unité de traitement 40 envoie plusieurs consignes de fréquence 41. Cette fonctionnalité permettra d'optimiser la correction à effectuer sur les futurs N signaux de mesure reçus, à partir des N valeurs de calibrage mémorisées pour chaque fréquence.

Pour augmenter la précision du détecteur, l'étape de mesure est effectuée N fois en utilisant ces N fréquences d'émission distinctes. Un signal de mesure est donc émis pour chacune des N fréquences distinctes sélectionnées. Par exemple, On peut effectuer un nombre de N étapes de mesure à partir de signaux émis entre 2,4 GHz et 2,48 GHz, en faisant des sauts successifs de fréquence inférieurs ou égaux à 0,08/(N-1) GHz pour chacune des étapes de mesure pour couvrir la bande ISM, comme par exemple 5 étapes de mesure avec des sauts de 0,02 GHz.

Ensuite, lors de l'étape de correction correspondant à ces N étapes de mesure, l'unité de traitement 40 calcule et mémorise N valeurs d'amplitudes corrigées, N valeurs de phases corrigées ainsi que N valeurs d'écarts de phase corrigés (en utilisant alors des mesures pour au moins N+1 fréquences, de façon à obtenir N valeurs d'écarts de phase). Pour cela, pour chacune des N fréquences sélectionnées, l'étape de correction utilise les valeurs mémorisées de l'amplitude la phase du signal de calibrage reçu pour la fréquence correspondante, et déterminées durant l'étape de calibrage.

Enfin, durant l'étape de correction, l'unité de traitement 40 effectue une moyenne des N valeurs d'amplitudes corrigées, des N valeurs de phases corrigées et des N valeurs d'écarts de phase corrigés pour une distance donnée, de façon à obtenir avantageusement une valeur plus précise d'une amplitude corrigée moyenne, d'une phase corrigée moyenne et d'un écart de phase corrigé moyen. Ce sont ces valeurs moyennes qui seront alors avantageusement utilisées durant l'étape de décision pour la détection de présence de cible et pour le calcul de la distance de cible.

Il est bien entendu que l'on peut, sans sortir du cadre de l'invention, imaginer d'autres variantes et perfectionnements de détail et de même envisager l'emploi de moyens équivalents.

**Revendications**

1. Méthode de détection d'une cible dans un détecteur hyperfréquence comportant des moyens d'émission (10,15,20,23) et des moyens de réception (20,23,25,30) de signaux radiofréquence dans la bande de fréquence ISM, une unité de traitement (40) délivrant une information de présence ou de distance de la cible, **caractérisée en ce que** la méthode comprend :

   - une étape préliminaire de calibrage à vide, c'est-à-dire sans présence de cible, dans laquelle les moyens d'émission (10,15,20,23) émettent un signal de calibrage, les moyens de réception (20,23,25,30) reçoivent en écho un signal de calibrage correspondant et l'unité de traitement (40) calcule et mémorise l'amplitude du signal de calibrage reçu et la phase du signal de calibrage reçu,
   - une étape de mesure d'une cible dans laquelle les moyens d'émission (10,15,20,23) émettent des signaux de mesure sur au moins deux fréquences d'émission distinctes et les moyens de réception (20,23,25,30) reçoivent en écho des signaux de mesure correspondants réfléchis par la cible,
   - une étape de correction dans laquelle l'unité de traitement (40) tient compte de l'amplitude du signal de calibrage reçu et de la phase du signal de calibrage reçu pour calculer une amplitude corrigée des signaux de mesure reçus, une phase corrigée des signaux de mesure reçus et un écart de phase corrigé entre deux signaux de mesure reçus de fréquences distinctes,
- une étape de décision dans laquelle l'unité de traitement (40) utilise d'abord l'amplitude corrigée pour détecter la présence d'une cible, puis utilise l'écart de phase corrigé pour calculer une première estimation de distance de cible, puis utilise la phase corrigée pour calculer une distance précise à partir de la première estimation de distance.

2. Méthode de détection selon la revendication 1, **caractérisée en ce que** l'étape de calibrage à vide est effectuée N fois, les moyens d'émission (10,15,20,23) émettant un signal de calibrage à N fréquences d'émission distinctes dans la bande de fréquence ISM, l'unité de traitement (40) calculant et mémorisant l'amplitude du signal de calibrage reçu et la phase du signal de calibrage reçu pour chaque fréquence d'émission.

3. Méthode de détection selon la revendication 2, **caractérisée en ce que** l'étape de mesure est effectuée N fois en utilisant lesdites N fréquences d'émission distinctes, et durant l'étape de correction, l'unité de traitement (40) calcule une amplitude corrigée, une phase corrigée et un écart de phase corrigé pour chacune desdites N fréquences d'émission distinctes, à l'aide de l'amplitude et de la phase du signal de calibrage reçu mémorisées pour la fréquence d'émission correspondante.

4. Méthode de détection selon la revendication 3, **caractérisée en ce que** durant l'étape de correction, l'unité de traitement (40) calcule une moyenne des N amplitudes corrigées, des N phases corrigées et des N écarts de phase corrigés, ces moyennes corrigées étant ensuite utilisées pour l'étape de décision.

5. Détecteur hyperfréquence comprenant des moyens d'émission (10,15,20,23) et des moyens de réception (20,23,25,30) de signaux radiofréquences dans la bande de fréquence ISM, une unité de traitement (40) des signaux émis et des signaux reçus, **caractérisé en ce que** le détecteur est susceptible de mettre en oeuvre une méthode de détection d'une cible selon l'une des revendications précédentes.

## Claims

1. Detection method of a target in a ultra high frequency detector which comprises emission means (10,15,20,23) and reception means (20,23,25,30) of radio frequency signals in the ISM band frequency, a treatment unit (40) delivering a presence information or a target distance, **characterized in that** the method comprises :

   - a preliminary step of idle calibration, i.e. without presence of a target, in which the emission means (10,15,20,23) emit a calibration signal, the reception means (20,23,25,30) receive in echo a corresponding calibration signal and the treatment unit (40) calculates and memorizes the amplitude of the received calibration signal and the phase of the received calibration signal,
   - a step of target measuring in which the emission means (10,15,20,23) emit measuring signals on at least two separate emission frequencies and the reception means (20,23,25,30) receive in echo corresponding measuring signals reflected by the target,
   - a step of correction in which the treatment unit (40) takes into account the amplitude of the received calibration signal and the phase of the received calibration signal to calculate a corrected amplitude of the received measuring signals, a corrected phase of the received measuring signals and a corrected phase variation between two received measuring signals at separate frequencies,
   - a step of decision in which the treatment unit (40) first uses the corrected amplitude to detect the presence of a target, then uses the corrected phase variation to calculate a first estimation of the target distance, then uses the corrected phase to calculate a precise distance starting from the first estimation.

2. Detection method according to claim 1, **characterized in that** the step of idle calibration is carried out N times, the emission means (10,15,20,23) emitting a calibration signal at N separate emission frequencies in the ISM band frequency, the treatment unit (40) calculating and memorizing the amplitude of the received calibration signal and the phase of the received calibration signal for each emission frequency.

3. Detection method according to claim 2, **characterized in that** the step of measuring is carried out N times using said N separate emission frequencies, and during the step of correction, the treatment unit (40) calculates a corrected amplitude, a corrected phase and a corrected phase variation for each one of said N separate emission frequencies, by using the amplitude and the phase of the received calibration signal memorized for the corresponding emission frequency.

**4.** Detection method according to claim 3, **characterized in that** during the step of correction, the treatment unit (40) calculates an average of the N corrected amplitudes, N corrected phases and N corrected phase variations, these corrected averages being then used for the step of decision.

**5.** Ultra high frequency detector comprising emission means (10,15,20,23) and reception means (20,23,25,30) of radio frequency signals in the ISM band frequency, a treatment unit (40) of the emitted signals and received signals, **characterized in that** the detector is capable to implement a detection method of a target according to one of the preceding claims.

**Patentansprüche**

**1.** Aufspürungsverfahren einer Zielgruppe in einem Ultra-Hochfrequenz Detektor, der eine Aussendungseinrichtung (10,15,20,23) und eine Empfangseinrichtung (20,23,25,30) von Radio-Frequenz Signale im ISM-Band Frequenz, eine Verarbeitungseinheit (40) die eine Anwesenheit Information oder einen Zielgruppe Abstand liefert umfasst, **dadurch gekennzeichnet, dass** das Verfahren umfasst:

- Ein vorangehende Leerlauf-Kalibrierungsschritt, d.h. ohne Anwesenheit einer Zielgruppe, in dem die Aussendungseinrichtung (10,15,20,23) sendet ein Kalibriersignal aus, die Empfangseinrichtung (20,23,25,30) empfängt als echo ein entsprechende Kalibriersignal und die Verarbeitungseinheit (40) berechnet und speichert die Amplitude des empfangenen Kalibriersignals und die Phase des empfangenen Kalibriersignals,
- ein Schritt zur Messung einer Zielgruppe, in dem die Aussendungseinrichtung (10,15,20,23) Messsignale auf mindestens zwei verschiedene Sendefrequenzen aus sendet und die Empfangseinrichtung (20,23,25,30) als echo entsprechende Messsignale durch die Zielgruppe widergespiegelt empfängt,
- ein Verbesserungsschritt, in dem die Verarbeitungseinheit (40) die Amplitude des empfangenen Kalibriersignals und die Phase des empfangenen Kalibriersignals berücksichtigt, um eine korrigierte Amplitude der empfangenen Messsignale, eine korrigierte Phase der empfangenen Messsignale und einen zwischen zwei empfangenen Messsignale von verschiedenen Frequenzen korrigierte Phasenunterschied zu berechnen,
- ein Entscheidungsschritt, in der die Verarbeitungseinheit (40) zuerst die korrigierte Amplitude verwendet um die Anwesenheit einer Zielgruppe aufzuspüren, dann der korrigierte Phasenunterschied verwendet um einer ersten Schätzung des Zielgruppe Abstands zu berechnen, dann die korrigierte Phase verwendet um einen aus dem ersten Schätzung bestimmte Abstand zu berechnen.

**2.** Aufspürungsverfahren nach Anspruch 1, **dadurch gekennzeichnet dass** der Leerlauf-Kalibrierungsschritt N mal ausgeführt wird, wo die Aussendungseinrichtung (10,15,20,23) ein Kalibriersignal mit N verschiedenen Sendefrequenzen im ISM-Band Frequenz aus sendet, und die Verarbeitungseinheit (40) die Amplitude des empfangenen Kalibriersignals und die Phase des empfangenen Kalibriersignals für jede Sendefrequenz berechnet und speichert.

**3.** Aufspürungsverfahren nach Anspruch 2, **dadurch gekennzeichnet, dass** der Messungsschritt N mal mit den N verschiedenen Sendefrequenzen ausgeführt wird, und während dem Verbesserungsschritt, die Verarbeitungseinheit (40) eine korrigierte Amplitude, eine korrigierte Phase und einen korrigierte Phasenunterschied für jedes der genannten N verschiedenen Sendefrequenzen berechnet, mit Hilfe von der Amplitude und dem Phase des empfangenen Kalibriersignals für der entsprechenden Sendefrequenz gespeichert.

**4.** Aufspürungsverfahren nach Anspruch 3, **dadurch gekennzeichnet, dass** während dem Verbesserungsschritt, die Verarbeitungseinheit (40) einen Durchschnitt der N korrigierten Amplituden, der N korrigierten Phasen und der N korrigierten Phasenunterschieden berechnet, diese korrigierten Durchschnitte die dann für dem Entscheidungsschritt benutzt werden.

**5.** Ultra-Hochfrequenz Detektor der eine Aussendungseinrichtung (10,15,20,23) und eine Empfangseinrichtung (20,23,25,30) von Radio-Frequenz Signale im ISM-Band Frequenz, eine der ausgesendeten Signale und empfangenen Signale Verarbeitungseinheit (40) umfasst, **dadurch gekennzeichnet, dass** der Detektor fähig ist, eine Aufspürungsverfahren einer Zielgruppe nach einem der vorhergehenden Ansprüche einzusetzen.

**FIG. 1**

**FIG. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040263383 A
- US 20040246166 A
- US 20050007124 A